# EUROPÄISCHE PATENTSCHRIFT

(11) **EP 2 048 478 B1**
(45) Veröffentlichungstag und Bekanntmachung des Hinweises auf die Patenterteilung: **01.06.2016**
(21) Anmeldenummer: 08017780.1
(22) Anmeldetag: 10.10.2008
(51) Int. Cl.: G01D 3/02

(54) **VERFAHREN ZUR ERKENNUNG EINES SENSORS AN EINEM MESSVERSTÄRKER UND ZUR SELBSTTÄTIGEN ANPASSUNG EINES MESSVERSTÄRKERS AN EINEN SENSOR**
METHOD FOR RECOGNISING A SENSOR AT A MEASUREMENT AMPLIFIER AND FOR AUTOMATICALLY ADAPTING A MEASUREMENT AMPLIFIER TO A SENSOR
PROCÉDÉ DE RECONNAISSANCE D'UN CAPTEUR À UN AMPLIFICATEUR DE MESURE ET D'ADAPTATION AUTOMATIQUE D'UN AMPLIFICATEUR DE MESURE À UN CAPTEUR

(30) Priorität: 10.10.2007 DE 102007048677
(43) Veröffentlichungstag der Anmeldung: 15.04.2009
(73) Patentinhaber: Hottinger Baldwin Messtechnik GmbH, 64293 Darmstadt (DE)
(72) Erfinder: Schneider, Jochen, Dr., 64372 Ober-Ramstadt (DE); Kunkel, Ulrich, 64807 Dieburg (DE)
(74) Vertreter: Staudte, Ralph

(56) Entgegenhaltungen:
- EP-A1- 1 302 755
- EP-A1- 1 780 514
- EP-A2- 1 462 769
- US-A- 5 377 128
- US-A1- 2005 209 810

## Beschreibung

Die Erfindung betrifft ein Verfahren zur Erkennung eines Sensors an einem Messverstärker und ein Verfahren zur selbsttätigen Anpassung eines Messverstärkers an einen Sensor.

Ein Messverstärker hat die Aufgabe, aus den von einem analog arbeitenden Sensor abgegebenen elektrischen Signalen die vom Sensor erfasste physikalische Größe zu ermitteln. Hierzu benötigt der Messverstärker Informationen über die Arbeitsweise des Sensors, wie zum Beispiel das Messprinzip. Die Informationen beschreiben insbesondere den Zusammenhang zwischen der physikalischen Messgröße des Sensors und dem elektrischen Ausgangssignal des Sensors, die sogenannte Kennlinie des Sensors. Um eine korrekte Arbeitsweise des Sensors für unterschiedliche Sensoren sicherzustellen, muss der Messverstärker für die einzelnen Sensoren manuell parametriert werden.

EP 0 324 067 A2 beschreibt einen Sensor zur Erfassung einer physikalischen Größe, die in ein elektrisches Signal umgewandelt wird. Das elektrische Signal wird durch eine Auswerteschaltung, zum Beispiel einen Messverstärker, in weiterverarbeitbare Daten umgesetzt. Der Sensor umfasst einen nichtflüchtigen Speicher mit Korrekturdaten des Sensors, die von dem Messverstärker ausgelesen werden können. Zur Synchronisation ist ein Taktsignal vorgesehen, das nach dem Anschließen des Sensors von dem Messverstärker an den Sensor übermittelt wird. Nachteilig hierbei ist die Tatsache, dass das Taktsignal zur Synchronisation der Korrekturdaten manuell ausgelöst werden muss. Das heißt, zunächst wird der Sensor an den Messverstärker angeschlossen, und daraufhin wird manuell, zum Beispiel durch einen Mitarbeiter, das Taktsignal des Messverstärkers ausgelöst, sodass die Korrekturdaten von dem Sensor an die Auswerteschaltung übertragen werden. Zwar wird hierdurch vermieden, dass zur Anpassung des Messverstärkers an den Sensor eine fachlich qualifizierte Kenntnis sowohl des Messverstärkers als auch des Sensors notwendig ist. Jedoch kann es leicht durch die manuelle Betätigung für das Taktsignal zu Fehlfunktionen kommen. So wird in einem Labor schnell vergessen, dass das Taktsignal überhaupt ausgelöst werden muss, was zur Folge hat, dass der Messverstärker gar nicht an den Sensor angepasst wird, sondern dass der Messverstärker weiterhin die vorherige Einstellung, zum Beispiel für einen ganz unterschiedlichen Sensor, aufweist, obwohl bereits ein neuer Sensor angeschlossen ist. Der Messverstärker liest somit nicht die neuen Daten des Sensors aus. Das führt dann zu falschen Messergebnissen, da der Messverstärker die Kennlinie des neuen Sensors nicht erfasst hat und somit nicht aus den elektrischen Signalen des Sensors die physikalischen Größen ermitteln kann.

Aus der DE 101 30 215 A1 ist ein Sensor bekannt, der einen Speicher mit Daten über die Arbeitsweise des Sensors umfasst. Der Speicher ist über mindestens zwei Leitungen mit einer Auswertevorrichtung verbunden. Die beiden Leitungen weisen im Messbetrieb gleiches Potential auf. Mittels der Auswertevorrichtung können Daten aus dem Speicher ausgelesen und in den Speicher geschrieben werden. Der Datenspeicher ist als ein Datenspeichermodul ausgebildet, das in ein Leitungspaar mit im Messmodus gleichem oder annähernd gleichem elektrischen Potential geschaltet ist. Durch eine Strombegrenzungsschaltung kann das Datenspeichermodul vom Messmodus in einen Kommunikationsmodus geschaltet werden. Auch hierbei ist von Nachteil, dass der Speicher manuell umgeschaltet werden muss, um die Sensordaten an die Auswertevorrichtung zu übermitteln.

In der US 5 377 128 A ist ein Messgerät, an das verschiedene Sensormodule angeschlossen werden können, beschrieben. Jedes Sensormodul weist einen Sensor und ein EEPROM auf, wobei in dem EEPROM Informationen über das Sensormodul wie z. B. der Typ des Sensors, das Datum der letzten Kalibrierung und Kalibrierungsdaten in digitaler Form gespeichert sind. Jedes der Sensormodule kann über eine Steckverbindung mit dem Messgerät verbunden werden. Das Messgerät kann mittels eines einzelnen speziell dafür vorgesehenen Kontakts der Steckverbindung erkennen, ob ein Sensormodul mit ihm verbunden ist. Falls ein Sensormodul an das Messgerät angeschlossen ist, liest das Messgerät die Informationen aus dem EEPROM des Sensormoduls aus. Anschließend vergleicht es den ausgelesenen Typ des in dem Sensormodul enthaltenen Sensors mit Sensortypen, die in einer unveränderlichen Datenbank, die in einem ROM des Messgeräts enthalten ist, abgelegt sind. Falls der ausgelesene Sensortyp mit einem der in der Datenbank abgelegten Sensortypen übereinstimmt, prüft das Messgerät noch, ob die ausgelesenen Kalibrierungsdaten des angeschlossenen Sensormoduls innerhalb bestimmter Grenzwerte liegen. Wenn auch dies der Fall ist, kann das Messgerät auf der Grundlage der ausgelesenen Kalibrierungsdaten Messwerte des Sensors in kalibrierter Form anzeigen.

Es ist die Aufgabe der Erfindung, ein Verfahren anzugeben, bei dem ein Messverstärker automatisch erkennt, ob ein Sensor angeschlossen ist oder nicht, und das eine einfache und automatische Anpassung des Messverstärkers an den Sensor ermöglicht.

Diese Aufgabe wird erfindungsgemäß mit den Merkmalen des Anspruchs 1 gelöst.

Bei dem erfindungsgemäßen Verfahren zur Erkennung eines Sensors an einem Messverstärker ist der Messverstärker über eine einen Stecker umfassende Steckverbindung mit dem Sensor verbindbar. Der Stecker weist wenigstens ein Kontaktpaar mit einem ersten Kontakt und einem zweiten Kontakt auf, wobei der erste Kontakt und der zweite Kontakt miteinander gekoppelt sind. Der Messverstärker weist ebenfalls ein Kontaktpaar mit einem ersten und einem zweiten Kontakt auf, wobei der erste Kontakt des Messverstärkers mit dem ersten Kontakt des Steckers und der zweite Kontakt des Messverstärkers mit dem zweiten Kontakt des Steckers kontaktierbar ist.

Zum Erkennen, ob der Sensor an dem Messverstärker angeschlossen ist, legt der Messverstärker ein elektrisches Potential an einen Kontakt seines Kontaktpaares an und misst das elektrische Potential an dem zweiten Kontakt des Kontaktpaares. Dann vergleicht der Messverstärker das elektrische Potential des ersten Kontakts mit dem elektrischen Potential des zweiten Kontakts. Durch den Vergleich der beiden Potentiale an den beiden Kontakten ist nun feststellbar, ob an dem Messverstärker ein Sensor angeschlossen ist oder nicht. Vergleicht der Messverstärker nun die beiden Potentiale miteinander und misst, dass die beiden Kontakte elektrisch miteinander verbunden sind, ist an dem Messverstärker ein Sensor angeschlossen. Die hierzu notwendige elektrische Verbindung des ersten und des zweiten Kontakts des Messverstärkers ist dadurch gegeben, dass der Stecker mit seinem ersten Kontakt an dem ersten Kontakt des Messverstärkers angeschlossen ist. Der erste Kontakt des Steckers ist mit dem zweiten Kontakt des Steckers gekoppelt und der zweite Kontakt wiederum mit dem zweiten Kontakt des Messverstärkers verbunden, sodass die beiden Kontakte des Kontaktpaares des Messverstärkers elektrisch miteinander verbunden sind.

Misst der Verstärker hingegen, dass die beiden Kontakte nicht elektrisch miteinander verbunden sind, ist an dem Messverstärker kein Sensor angeschlossen, da nun der erste Kontakt des Messverstärkers gerade nicht über die beiden Kontakte des Steckers mit dem zweiten Kontakt verbunden ist. Somit stellt der Messverstärker automatisch fest, ob ein Sensor an dem Messverstärker angeordnet ist.

Stellt der Messverstärker bei der automatischen Erkennung fest, dass ein Sensor angeschlossen ist, liest dieser die Daten aus dem Datenspeicher des Sensors aus. Die Daten des Datenspeichers umfassen zweckmäßig die Informationen über die Arbeitsweise des Sensors, insbesondere die Kennlinie des Sensors, die den Zusammenhang zwischen der physikalischen Messgröße des Sensors und dem elektrischen Ausgangssignal des Sensors beschreibt. Ohne die Kenntnis der Kennlinie des Sensors ist der Messverstärker nicht in der Lage, die elektrischen Signale des Sensors richtig auszuwerten.

Der Messverstärker vergleicht die ausgelesenen Daten aus dem Speicher des Sensors mit den Daten, aufgrund derer der Messverstärker zuvor justiert war. Hierzu weist der Messverstärker zweckmäßig einen wiederbeschreibbaren Speicher auf, in den der Messverstärker die jeweiligen Sensor- und Kalibrierungsdaten des Sensors bzw. der Sensoren schreibt und speichert.

Wenn sich die ausgelesenen Daten von den vorherigen Daten unterscheiden, dann stellt der Messverstärker aufgrund der ausgelesenen Daten seine Justierung entsprechend ein. Dadurch ist der Messverstärker in der Lage, die elektrischen Signale des Sensors korrekt auszuwerten.

Dadurch wird erreicht, dass der Messverstärker nicht bei jedem Erkennen eines Sensors automatisch justiert wird, was eine gewisse Zeitdauer in Anspruch nimmt, sondern nur, wenn der Messverstärker feststellt, dass ein sich von dem vorherigen Sensor unterscheidender neuer Sensor angeschlossen worden ist. Insbesondere wird dadurch eine neue Justage vermieden, wenn nach dem Ausschalten des Messverstärkers kein neuer Sensor angeschlossen worden ist.

Das Verfahren bietet den Vorteil, dass beim Anstecken eines Sensors der Messverstärker das Anstecken automatisch registriert und seine eigene Justierung entsprechend den Eigenschaften des Sensors automatisch vornimmt.

In einer ersten bevorzugten Ausgestaltung ist das Kontaktpaar des Steckers überbrückt, d.h. dass zwischen dem ersten Kontakt und dem zweiten Kontakt des Steckers eine elektrische Brücke in dem Stecker angeordnet ist. Hierbei ist ferner von Vorteil, wenn es sich bei dem Kontaktpaar des Steckers um einen ungenutzten Kontakt handelt.

In einer weiteren bevorzugten Ausgestaltung wird anstelle eines ungenutzten Kontakts ein Sensoranschluss für das Erkennen eines angesteckten Sensors genutzt. Hierzu muss das Potential des Sensoranschlusses eindeutig von dem ungesteckten eines offenen Kontakts unterscheidbar sein. Dies ist zum Beispiel bei Brückenspeiseleitungen und deren Rückführung, sogenannten Sechsleiterschaltungen, der Fall. Ist nun ein Sensor an den Messverstärker angeschlossen, führt die Rückführleitung ein Potential, welches im Wesentlichen, d.h. bis auf den Spannungsabfall, dem Potential der Speiseleitung für den Sensor entspricht. Der Messverstärker vergleicht hierbei das Potential des Kontakts der Speiseleitung mit dem Potential des Kontakts des Sensorsanschlusses. Sind diese beiden Potentiale annähernd gleich, ist ein Sensor an dem Messverstärker angeschlossen. Ist nun kein Sensor angeschlossen, dann führt die Rückführleitung kein Potential. Dementsprechend misst der Messverstärker beim Vergleich des Kontaktanschlusses und des Kontakts für die Rückführleitung eine entsprechende Potentialdifferenz.

In noch einer weiteren bevorzugten Ausgestaltung werden die einzelnen Verfahrensschritte nach dem Einschalten des Messverstärkers ausgeführt. Dies ist bei der folgenden Situation von Vorteil: An einem Messverstärker ist ein Sensor angeschlossen, und der Messverstärker ist entsprechend den Sensordaten kalibriert. Dann wird der Messverstärker ausgeschaltet, und während der Messverstärker ausgeschaltet ist, wird zum Beispiel ein neuer Sensor an den Messverstärker angeschlossen. Der Messverstärker würde dann registrieren, dass immer noch ein Sensor angeschlossen ist, und ein erneutes Auslesen der Sensordaten würde nicht erfolgen. Es ist deshalb vorgesehen, dass der Messverstärker nach dem Einschalten folgende Schritte ausführt: automatisches Erkennen eines Sensors nach dem oben beschriebenen Verfahren und Auslesen der Daten aus dem Speicher des Sensors. Dadurch wird sichergestellt, dass nach dem Anschalten des Messverstärkers festgestellt wird, welche Art von Sensor angeschlossen ist. Ferner wird dadurch erreicht, dass beim Einschalten des Messverstärkers überprüft wird, ob überhaupt ein Sensor an dem Messverstärker angeschlossen ist. Der Messverstärker wird dann gegebenenfalls aufgrund der neu eingelesenen Daten eines neuen Sensors justiert.

Weitere Vorteile der Erfindung ergeben sich aus den abhängigen Ansprüchen und der nachfolgenden Beschreibung.

Nachstehend wird die Erfindung anhand von Ausführungsbeispielen und anhand der anliegenden Zeichnungen näher erläutert.
- Fig. 1: zeigt ein bevorzugtes Ausführungsbeispiel eines Verfahrens zur Erkennung eines Sensors an einem Messverstärker, und
- Fig. 2: zeigt ein bevorzugtes Ausführungsbeispiel eines Verfahrens zur Anpassung eines Messverstärkers an einen Sensor.

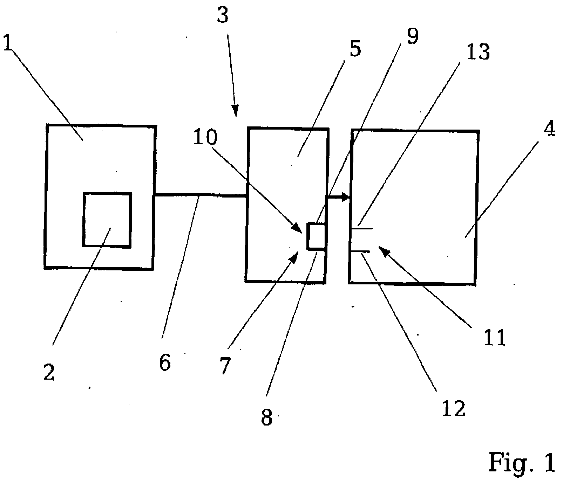

In Fig. 1 ist ein analoger Sensor 1 mit einem Speicher 2 gezeigt, wobei der Sensor 1 über eine Steckverbindung 3 mit einem Messverstärker 4 verbunden ist. Die Steckverbindung 3 umfasst einen Stecker 5, der über ein Kabel 6 mit dem Sensor 1 verbunden ist. Der Stecker 5 ist in eine an dem Messverstärker 4 vorgesehene Buchse steckbar, was in Fig. 1 durch einen Pfeil verdeutlicht ist.

Der Stecker 5 weist ein ungenutztes Kontaktpaar 7 mit einem ersten Kontakt 8 und einem zweiten Kontakt 9 auf. Der erste Kontakt 8 ist über eine elektrische Brücke 10, die der Einfachheit halber lediglich als Verbindungsstrich zwischen den beiden Kontakten 8 und 9 dargestellt ist, mit dem zweiten Kontakt 9 gekoppelt.

Der Messverstärker 4 weist ebenfalls ein Kontaktpaar 11 mit einem ersten Kontakt 12 und einem zweiten Kontakt 13 auf, wobei der erste Kontakt 8 des Steckers 5 mit dem ersten Kontakt 12 des Messverstärkers 4 und der zweite Kontakt 9 des Steckers 5 mit dem zweiten Kontakt 13 des Messverstärkers 4 kontaktierbar ist.

Das Verfahren zur Erkennung eines Sensors an einem Messverstärker funktioniert nun folgendermaßen.

Um zu erkennen, ob der Sensor 1 an dem Messverstärker 4 angeschlossen ist, legt der Messverstärker 4 an den ersten Kontakt 12 ein elektrisches Potential. Dann misst der Messverstärker 4 das elektrische Potential an dem zweiten Kontakt 13. Nun vergleicht der Messverstärker 4 das elektrische Potential des ersten Kontakts 12 mit dem elektrischen Potential an dem zweiten Kontakt 13. Stellt der Messverstärker 4 beim Vergleich der beiden elektrischen Potentiale an den Kontakten fest, dass die beiden Kontakte elektrisch verbunden sind, dann ist ein Stecker 5 gesteckt und ein Sensor 1 an den Messverstärker 4 angeschlossen. Die elektrische Verbindung der beiden Kontakte 12 und 13 des Messverstärkers 4 entsteht erst durch ein Einstecken des Steckers 5, da der erste Kontakt 12 des Messverstärkers 4 über den ersten Kontakt 8 des Steckers 5, die elektrische Brücke 10 und den zweiten Kontakt 9 des Steckers 5 mit dem zweiten Kontakt 13 des Messverstärkers 4 elektrisch verbunden ist.

Stellt der Messverstärker 4 beim Vergleich der Potentiale seiner beiden Kontakte 12 und 13 hingegen fest, dass diese nicht elektrisch miteinander verbunden sind, dann ist kein Stecker 5 und kein Sensor 1 an dem Messverstärker 4 angeschlossen.

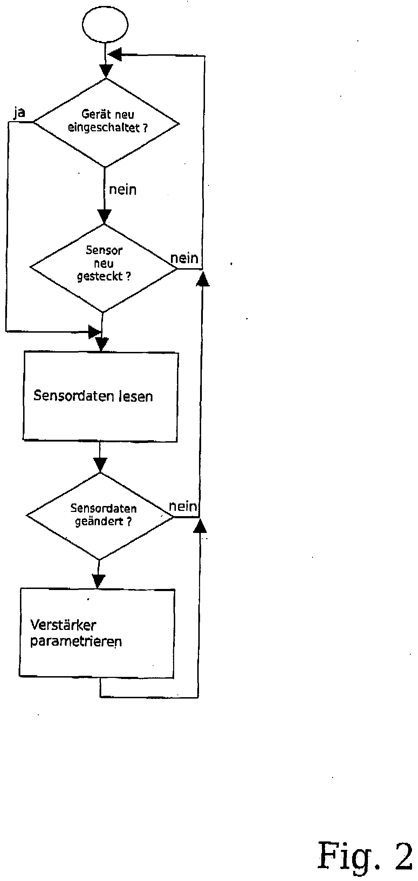

In Fig. 2 ist ein Ablaufdiagramm für ein bevorzugtes Ausführungsbeispiel eines Verfahrens zur Anpassung eines Messverstärkers an einen Sensor gezeigt, das nach dem Anschalten des Messverstärkers angewendet wird.

Wird der Messverstärker, der zum Beispiel in einem Gerät angeordnet ist, eingeschaltet, dann wird automatisch ein Erkennen des Sensors 1 nach dem oben beschriebenen Verfahren durchgeführt. Wird ein neu eingesteckter Sensor 1 von dem Messverstärker 4 erkannt, werden von dem Messverstärker 4 die Daten aus dem Speicher 2 des Sensors 1 ausgelesen. Die Daten umfassen Informationen über die Arbeitsweise des Sensors 1, insbesondere die Kennlinie des Sensors 1.

Es versteht sich, dass der Sensor 1 auch weitere Daten umfassen kann, wie zum Beispiel das Kalibrierungsdatum, welches zur Überwachung der Gültigkeit der Kalibrierung des Messverstärkers 4 verwendet werden kann. So kann der Messverstärker 4 zum Beispiel vor dem Ablauf des Kalibrierungsintervalls warnen.

Diese neu ausgelesenen Daten vergleicht der Messverstärker 4 mit gespeicherten vorherigen Sensordaten, mit denen der Messverstärker 4 vor dem Ausschalten justiert war. Hierzu weist der Messverstärker zum Beispiel einen internen wiederbeschreibbaren Speicher auf, in den die Sensordaten des angeschlossenen Sensors 1 oder der angeschlossenen Sensoren geschrieben und gespeichert werden. Stimmen die neu ausgelesenen Daten des Sensors 1 mit den vorherigen Sensordaten überein, so hat der Messverstärker 4 festgestellt, dass der Sensor nicht gewechselt worden ist und seine bestehende Einstellung für den angeschlossenen Sensor passt. Nun können mit dem Sensor 1 Messungen vorgenommen werden, wobei der Messverstärker 4 die von dem Sensor 1 übermittelten elektrischen Signale aufgrund der für den Sensor 1 passenden Einstellung in die richtigen physikalischen Größen umwandelt.

Stellt der Messverstärker 4 beim Vergleich der alten mit den neuen Sensordaten hingegen fest, dass die neu eingelesenen Daten sich von den Daten des vorherigen Sensors unterscheiden, wird der Messverstärker 4 aufgrund der neu eingelesenen Daten für den neuen Sensor 1 justiert, sodass nach der neuen Einstellung des Messverstärkers 4 Messungen mit dem Sensor durchgeführt werden, wobei der Messverstärker 4 die von dem Sensor 1 übermittelten elektrischen Signale aufgrund der für den neuen Sensor 1 passenden Justage in die richtigen physikalischen Größen umwandelt.

## Patentansprüche

1. Verfahren zur Erkennung eines analogen Sensors (1) mit einem Speicher (2) an einem Messverstärker (4) und zur selbsttätigen Anpassung des Messverstärkers (4) an den Sensor(1), wobei
der Speicher (2) des Sensors (1) Sensordaten umfasst, der Messverstärker (4) über eine einen Stecker (5) umfassende Steckverbindung (3) mit dem Sensor (1) verbindbar ist und wenigstens ein Kontaktpaar (11) mit einem ersten Kontakt (12) und einem zweiten Kontakt (13) umfasst,
der Stecker (5) wenigstens ein Kontaktpaar (7) mit einem ersten Kontakt (8) und einem mit dem ersten Kontakt (8) gekoppelten zweiten Kontakt (9) umfasst,
die Kontakte des Messverstärkers (4) und des Steckers (5) miteinander kontaktierbar sind, und
wobei das Verfahren die folgenden Schritte umfasst:
der Messverstärker (4) legt ein elektrisches Potential an den ersten Kontakt (12) des Kontaktpaares (11) an,
der Messverstärker (4) misst das elektrische Potential an dem zweiten Kontakt (13) des Kontaktpaares (11),
der Messverstärker (4) vergleicht das elektrische Potential des ersten Kontakts (12) mit dem elektrischen Potential des zweiten Kontakts (13),
der Messverstärker (4) liest dann, wenn die elektrischen Potentiale des ersten Kontakts (12) und des zweiten Kontakts (13) gleich oder annähernd gleich sind, die Sensordaten aus dem Speicher (2) des Sensors (1) aus und vergleicht die ausgelesenen Sensordaten mit in dem Messverstärker (4) gespeicherten vorherigen Sensordaten, und
der Messverstärker (4) wird dann, wenn die ausgelesenen Sensordaten sich von den vorherigen Sensordaten unterscheiden, aufgrund der ausgelesenen Sensordaten justiert.

2. Verfahren nach Anspruch 1, wobei zwischen dem ersten Kontakt (8) und dem zweiten Kontakt (9) des Kontaktpaares (7) des Steckers (5) eine elektrische Brücke (10) vorgesehen ist.

3. Verfahren nach Anspruch 1 oder 2, wobei das Kontaktpaar (7) des Steckers (5) ungenutzt ist.

4. Verfahren nach Anspruch 1, wobei zumindest ein Kontakt der Kontaktpaare (7, 11) ein Sensoranschluss ist.

5. Verfahren nach einem der vorhergehenden Ansprüche, wobei die Sensordaten in dem Speicher (2) des Sensors (1) Kalibrierdaten umfassen.

6. Verfahren nach Anspruch 5, wobei die Kalibierdaten das Kalibrierdatum umfassen.

7. Verfahren nach einem der vorhergehenden Ansprüche, wobei mehrere Sensoren vorgesehen sind und jeder der Sensoren mit dem Messverstärker (4) verbindbar ist.

8. Verfahren nach einem der vorhergehenden Ansprüche, wobei der Sensor eine Wägezelle ist.

9. Verfahren nach einem der vorhergehenden Ansprüche, wobei die einzelnen Verfahrensschritte nach dem Einschalten des Messverstärkers (4) ausgeführt werden.

## Claims

1. A method for recognising an analogue sensor (1) with a memory (2) at a measurement amplifier (4) and for automatically adapting the measurement amplifier (4) to the sensor (1), wherein
the memory (2) of the sensor (1) includes sensor data,
the measurement amplifier (4) can be connected to the sensor (1) via a plug connection (3) comprising a plug connector (5), and includes at least one pair of contacts (11) comprising a first contact (12) and a second contact (13),
the plug connector (5) includes at least one pair of contacts (7) comprising a first contact (8) and a second contact (9) coupled to the first contact (8),
the contacts of the measurement amplifier (4) and of the plug connector (5) can be brought into contact with each other, and
wherein said method comprises the following steps:
the measurement amplifier (4) applies an electrical potential to the first contact (12) of the pair of contacts (11),
the measurement amplifier (4) measures the electrical potential at the second contact (13) of the pair of contacts (11),
the measurement amplifier (4) compares the electrical potential at the first contact (12) with the electrical potential at the second contact (13),
the measurement amplifier (4) then reads, if the electrical potentials of the first contact (12) and of the second contact (13) are equal or approximately equal, the sensor data from the memory (2) of the sensor (1) and compares the retrieved sensor data with previous sensor data stored in the measurement amplifier (4), and
the measurement amplifier (4) is then adjusted, on the basis of the retrieved sensor data, if the retrieved sensor data differ from the previous sensor data.

2. The method according to claim 1, wherein an electrical bridge (10) is provided between the first contact (8) and the second contact (9) of the pair of contacts (7) of the plug connector (5).

3. The method according to claim 1 or 2, wherein the pair of contacts (7) of the plug connector (5) are unused.

4. The method according to claim 1, wherein at least one contact of the pairs of contacts (7, 11) is a sensor connection.

5. The method according to any one of the preceding claims, wherein the sensor data in the memory (2) of the sensor (1) include calibration data.

6. The method according to claim 5, wherein the calibration data include the calibration date.

7. The method according to any one of the preceding claims, wherein a plurality of sensors are provided and each of the sensors can be connected to the measurement amplifier (4).

8. The method according to any one of the preceding claims, wherein the sensor is a weighing cell.

9. The method according to any one of the preceding claims, wherein the individual steps of the method are carried out after switching on the measurement amplifier (4).

## Revendications

1. Procédé de reconnaissance d'un capteur (1) analogique doté d'une mémoire (2) au niveau d'un amplificateur de mesure (4) et d'adaptation automatique de l'amplificateur de mesure (4) au capteur (1), dans lequel
la mémoire (2) du capteur (1) comprend des données de capteur,
l'amplificateur de mesure (4) peut être connecté au capteur (1) par l'intermédiaire d'une connexion enfichable (3) comprenant une fiche (5) et comprend au moins une paire de contacts (11) ayant un premier contact (12) et un second contact (13),
la fiche (5) comprend au moins une paire de contacts (7) ayant un premier contact (8) et un second contact (9) couplé avec le premier contact (8),
les contacts de l'amplificateur de mesure (4) et de la fiche (5) peuvent être mis en contact l'un avec l'autre, et
dans lequel le procédé comprend les étapes suivantes:
l'amplificateur de mesure (4) applique un potentiel électrique au premier contact (12) de la paire de contacts (11),
l'amplificateur de mesure (4) mesure le potentiel électrique au niveau du second contact (13) de la paire de contacts (11),
l'amplificateur de mesure (4) compare le potentiel électrique du premier contact (12) avec le potentiel électrique du second contact (13),
l'amplificateur de mesure (4) lit ensuite, si les potentiels électriques du premier contact (12) et du second contact (13) sont égaux ou approximativement égaux, les données de capteur issues de la mémoire (2) du capteur (1) et compare les données de capteur lues avec de précédentes données de capteur stockées dans l'amplificateur de mesure (4), et
l'amplificateur de mesure (4) est ensuite ajusté, si les données de capteur lues diffèrent des données de capteur précédentes, sur la base des donnés de capteur lues.

2. Procédé selon la revendication 1, dans lequel est prévu un pont électrique (10) entre le premier contact (8) et le second contact (9) de la paire de contacts (7) de la fiche (5).

3. Procédé selon la revendication 1 ou 2, dans lequel la paire de contacts (7) de la fiche (5) n'est pas utilisée.

4. Procédé selon la revendication 1, dans lequel au moins un contact des paires de contacts (7, 11) est une borne de capteur.

5. Procédé selon l'une quelconque des revendications précédentes, dans lequel les données de capteur dans la mémoire (2) du capteur (1) comprennent des données de calibrage.

6. Procédé selon la revendication 5, dans lequel les données de calibrage comprennent la date de calibrage.

7. Procédé selon l'une quelconque des revendications précédentes, dans lequel sont prévus plusieurs capteurs dont chacun peut être connecté à l'amplificateur de mesure (4).

8. Procédé selon l'une quelconque des revendications précédentes, dans lequel le capteur est une cellule de pesée.

9. Procédé selon l'une quelconque des revendications précédentes, dans lequel les étapes individuelles du procédé sont exécutées après la mise sous tension de l'amplificateur de mesure (4).
